# EUROPÄISCHE PATENTANMELDUNG

(11) **EP 1 657 108 A1**
(43) Veröffentlichungstag der Anmeldung: **17.05.2006**
(21) Anmeldenummer: 05023481.4
(22) Anmeldetag: 27.10.2005
(51) Int. Cl.: B60L 13/10, B60M 3/04

(54) **Verfahren und Vorrichtung zum Betreiben eines Magnetschwebefahrzeugs**

(30) Priorität: 10.11.2004 DE 102004054919
(71) Anmelder: Transrapid International GmbH & Co.KG, 10587 Berlin (DE)
(72) Erfinder: Fischperer, Rolf, 10623 Berlin (DE)
(74) Vertreter: Freiherr von Schorlemer, Reinfried

(57) **Zusammenfassung**

Die Erfindung betrifft ein Verfahren und eine Vorrichtung zum Betreiben eines Magnetschwebefahrzeugs mittels einer wenigstens einen Langstator-Linearantrieb aufweisenden Vorrichtung. Die Linearantriebe sind längs eines Fahrwegs in einzelne Antriebsbereiche (A3, A4) unterteilt, in denen normalerweise jeweils nur ein Fahrzeug (7e, 7f) verkehren kann. Zur Vergrößerung der Fahrzeugdichte längs des Fahrwegs ist erfindungsgemäß vorgesehen, ausgewählte Antriebsbereiche (A4) in wenigstens zwei voneinander unabhängige Antriebsbereichabschnitte (A4a, A4b) zu unterteilen und in jedem Antriebsbereichabschnitt (A4a, A4b) ein Fahrzeug (7f, 7g) mit einem Teil der pro Antriebsbereich (A4) vorgegebenen Leistung zu betreiben (Fig. 4b).

## Beschreibung

Die Erfindung betrifft ein Verfahren und eine Vorrichtung zum Betreiben eines Magnetschwebefahrzeugs gemäß den Oberbegriffen der Ansprüche 1 und 8.

Bei bekannten Verfahren und Vorrichtungen dieser Art werden Langstator-Linearantriebe verwendet (z. B. US-PS 5 053 654, DE 199 22 441 A1), die als Primärteil einen längs eines gegebenen Fahrwegs verlegten Langstator mit wenigstens einer Langstatorwicklung enthalten (z. B. US-PS 4 665 329, US-PS 4 728 382), in der ein in Bewegungsrichtung des zu betreibenden Fahrzeugs fortschreitendes, elektromagnetisches Wanderfeld erzeugt wird. Als Sekundärteil dient dagegen eine am Fahrzeug montierte, meistens über dessen ganze Länge erstreckte Erregeranordnung (z. B. DE 34 10 119 A1), die aus gleichzeitig als Tragmagnete wirkenden Elektromagneten zusammengesetzt ist. Die Langstatorwicklung wird gewöhnlich in eine Vielzahl von Wicklungsabschnitten unterteilt, die in Fahrtrichtung unmittelbar hintereinander liegen, durch Wechselstellen elektrisch voneinander getrennt sind und mit Längen von z. B. 1000 m bis 2000 m zwar vergleichsweise kurz, aber erheblich länger als das z. B. bis 250 m lange Fahrzeug sind. Parallel zum Fahrweg ist außerdem eine Mehrzahl von vergleichsweise langen, z. B. ca. 20 km langen Streckenkabeln verlegt, die an einem Ende (= Einfachspeisung) oder an beiden Enden (= Doppelspeisung) an sogenannte Unterwerke angeschlossen sind, in denen die zur Strom- und Spannungsversorgung der Langstatorwicklung erforderlichen Spannungsquellen in Form von Umrichtern, lokale Steuermittel und dgl. installiert sind. Zur Begrenzung des Energieverbrauchs und der wirksamen Impedanz werden dabei immer nur diejenigen Wicklungsabschnitte, in denen sich das Fahrzeug gerade befindet, mit Strom versorgt, indem die einzelnen Wicklungsabschnitte mit Hilfe von Schalteinrichtungen entsprechend der Fortbewegung des Fahrzeugs einzeln und nacheinander mit zugeordneten Streckenkabeln und Spannungsquellen verbunden werden. Entsprechende Umschaltungen können für die Verbindungen der Streckenkabel mit den Spannungsquellen vorgesehen werden (DE 29 32 764 A1). Beim Betrieb eines derartigen Magnetschwebefahrzeugs liefern die Spannungsquellen Spannungen, die im wesentlichen gleich der Summe aus der vom Fahrzeug induzierten Spannung (Polradspannung), dem Spannungsabfall am jeweiligen Wicklungsabschnitt und dem Spannungsabfall am zugehörigen Teil des Streckenkabels sind.

Aufgrund der beschriebenen Betriebsweise ist der Antrieb für das Magnetschwebefahrzeug in eine Mehrzahl von Antriebsbereichen unterteilt, die in Richtung des Fahrwegs aufeinander folgen. Jeder Antriebsbereich enthält wenigstens ein Streckenkabel, diesem zugeordnete Wicklungsabschnitte und wenigstens eine an das Streckenkabel angeschlossene Spannungsquelle für die Energieversorgung. Dabei kann sich aus praktischen und technischen Gründen in jedem Antriebsbereich stets nur ein Magnetschwebefahrzeug befinden, d. h. ein nachfolgendes Fahrzeug darf erst dann in einen Antriebsbereich einfahren, wenn ein vorausfahrendes Fahrzeug diesen Antriebsbereich verlassen hat. Der Fahrtakt und damit auch der Fahrplan mit der höchsten zulässigen Fahrzeugfolge sind daher durch die Länge eines Antriebsbereichs fest vorgegeben und nach dem Bau einer Magnetschwebebahn nicht mehr veränderbar.

Bei der praktischen Anwendung von Magnetschwebebahnen dieser Art hat sich das Bedürfnis ergeben, zwischen den fahrplanmäßigen Fahrten zusätzliche Sonderfahrten vorzusehen und den Fahrtakt zumindest in ausgewählten Teilen des Fahrwegs zu verkleinern, insbesondere zu halbieren (z. B. von 10 min. auf 5 min). Mit den bisher bekannt gewordenen Verfahren und Vorrichtungen der eingangs bezeichneten Gattung ist dies jedoch allenfalls dadurch möglich, daß die Länge der Antriebsbereiche halbiert und die Zahl der Spannungsquellen verdoppelt wird. Das ist angesichts der damit verbundenen, beträchtlich erhöhten Installationskosten und des Umstandes, daß ein Bedarf an außerplanmäßigen Sonderfahrten meistens nur zeitweilig wie z. B. zu bestimmten Tageszeiten oder bei unvorhergesehenen Betriebsbedingungen besteht, in aller Regel nicht tragbar.

Das technische Problem der vorliegenden Erfindung besteht daher darin, bei Verfahren und Vorrichtungen der eingangs bezeichneten Gattungen ohne wesentliche Änderungen der Hardware mindestens eine Halbierung des Fahrtaktes zu ermöglichen. Dabei soll es auch möglich sein, bereits installierte Antriebe nachträglich so umzurüsten, daß sie bei Bedarf mindestens mit dem halben Fahrtakt betrieben werden können.

Zur Lösung dieser Aufgabe dienen die kennzeichnenden Merkmale der Ansprüche 1 und 8.

Die erfindungsgemäße Unterteilung von einigen oder allen, für den Normalbetrieb konzipierten Antriebsbereichen in wenigstens je zwei Antriebsbereichabschnitte kleinerer Länge ist bei Aufrechterhaltung der installierten Leistungen mit einem Leistungsverlust und daher auch mit einer Verringerung der Fahrgeschwindigkeit in den Antriebsbereichabschnitten verbunden. Da aber bei Magnetschwebefahrzeugen der hier interessierenden Art eine Halbierung der Leistung nicht gleichbedeutend mit einer nur halb so großen erreichbaren Fahrgeschwindigkeit ist, können die nur bei Sonderfahrten auftretenden Leistungsverluste ohne weiteres toleriert werden. Dies gilt insbesondere in Anbetracht des Vorteils, daß die erhöhten Zugdichten mit einem verhältnismäßig geringen Aufwand realisiert werden können. Außerdem bietet die Erfindung den Vorteil, daß sie sowohl auf Linearantriebe mit Einfachspeisung als auch auf Linearantriebe mit Doppelspeisung anwendbar ist.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Querschnitt durch ein Magnetschwebefahrzeug und dessen Fahrweg im Bereich des Langstatormotors;
Fig. 2 schematisch eine bekannte, einen Langstator-Linearantrieb mit Einfachspeisung aufweisende Vorrichtung zum Betreiben eines Magnetschwebefahrzeugs nach Fig. 1;
Fig. 3a und 3b in schematischen Darstellungen ein Ausführungsbeispiel für den Aufbau eines Antriebsbereichs nach dem Stand der Technik bzw. nach der Erfindung bei Anwendung der aus Fig. 2 ersichtlichen Einfachspeisung; und
Fig. 4a, 4b bzw. 5a, 5b bzw. 6a, 6b den Fig. 3a und 3b entsprechende Darstellungen von drei weiteren Ausführungsbeispielen nach dem Stand der Technik bzw. nach der Erfindung.

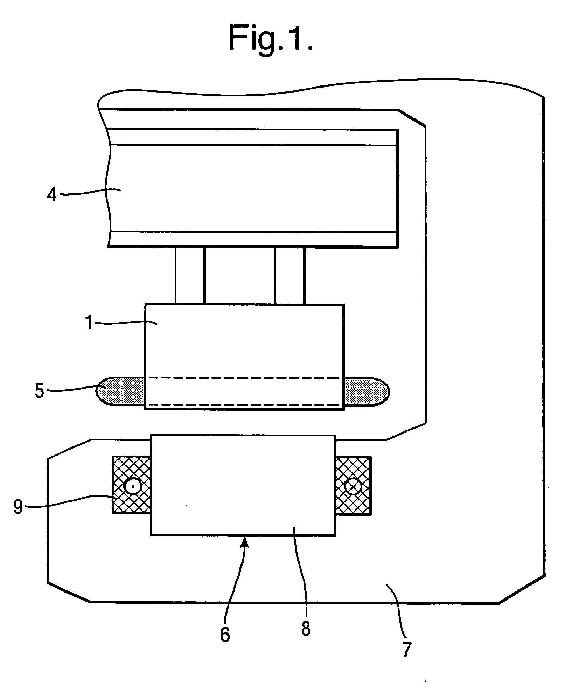

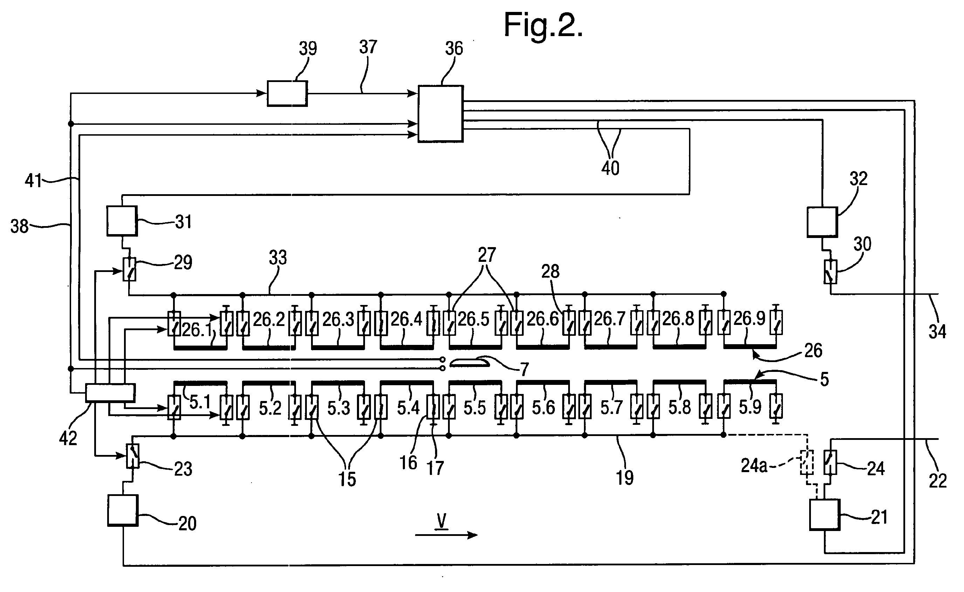

Bei einer Magnetschwebebahn mit einem synchronen Langstator-Linearmotor (Fig. 1 und 2) ist ein Statorblechpaket 1, das eine Vielzahl von aufeinander folgend angeordneten Nuten und Zähnen aufweist, ortsfest mit einem längs einer vorgegebenen Trasse errichteten Fahrweg 4 verbunden. In die Nuten des Statorblechpakets 1 ist eine Langstatorwicklung 5 in Form einer Drehstromwicklung eingelegt, die von einem Umrichter mit Drehstrom variabler Amplitude und Frequenz gespeist wird, wodurch sich in bekannter Weise eine fortschreitende Strombelagswelle längs des Langstator-Linearmotors ausbildet. Das Erregerfeld des Langstator-Linearmotors wird durch eine Erregeranordnung 6 erzeugt, die aus einer Vielzahl von an einem Fahrzeug 7 montierten, in dessen Längsrichtung verteilt angeordneten und gleichzeitig die Funktion des Tragens erfüllenden Magneten gebildet ist, die aus je einem Magnetkern 8 und einer Erregerwicklung 9 bestehen. Außerdem ist in der Regel auf beiden Seiten des Fahrwegs 4 je ein Statorblechpaket 1 mit je einer normalerweise dreiphasigen Langstatorwicklung 5 und jeweils einer zugeordneten Erregeranordnung 6 vorgesehen, wobei drei zu den drei Phasen R, S und T gehörende Einzelwicklungen jeweils abwechselnd hintereinander bzw. miteinander verschachtelt angeordnet und z. B. in Sternschaltung verbunden sind.

Zur Minimierung des Bedarfs an Blindleistung und Spannung des Langstatormotors wird jeweils nur dasjenige Teilstück der Langstatorwicklung 5 aktiviert (Fig. 2), das gerade von dem z. B. in Richtung des Fahrwegs (Pfeil v) bewegten Fahrzeug 7 befahren wird. Hierzu ist die Langstatorwicklung 5, wie Fig. 2 schematisch zeigt, in eine Vielzahl von in Längsrichtung des Fahrwegs unmittelbar aufeinanderfolgenden Wicklungsabschnitten 5.1 bis 5.9 unterteilt, die über je eine zugeordnete Schalteinrichtung 15 bzw. 16 an einen Sternpunkt 17 bzw. an ein Streckenkabel 19 angeschlossen werden können. In Fig. 2 trifft dies gerade für den Wicklungsabschnitt 5.4 zu. Im Ausführungsbeispiel ist ein Ende des Streckenkabels 19 an eine Spannungsquelle 20 angeschlossen. Die Spannungsquelle 20 besteht in der Regel aus wenigstens einem Umrichter und ist in einem Unterwerk untergebracht, in dem zumindest die zur Einspeisung des Stroms in die Wicklungsabschnitte 5.1 bis 5.9 erforderlichen Einrichtungen und ggf. auch alle Einrichtungen enthalten sind, die zur Steuerung und Überwachung des Fahrzeugs in dem vom Streckenkabel 19 gespeisten Bereich der Langstatorwicklung 5 benötigt werden. Weitere Spannungsquellen 21 sind an weitere, längs des Fahrwegs folgende Streckenkabel 22 angeschlossen, mit denen in entsprechender Weise nachfolgende Wicklungsabschnitte des Linearmotors gespeist werden können. Mit Hilfe von Schalteinrichtungen 23, 24 werden die verschiedenen Spannungsquellen 20, 21 immer dann aktiviert, wenn das Fahrzeug 7 in den von einer Spannungsquelle 20, 21 bzw. einem Streckenkabel 19, 22 definierten Abschnitt des Fahrwegs einfährt bzw. diesen verläßt.

Da nach Fig. 2 jedes Streckenkabel 19, 22 nur mit je einer Spannungsquelle 20 bzw. 21 verbunden ist, wird diese Betriebsart "Einfachspeisung" genannt. Alternativ sind aber auch Betriebsarten mit einer "Doppelspeisung" bekannt, bei denen jedes Strekkenkabel 19 an beiden Enden mit je einer Spannungsquelle 20 und 21 verbunden werden kann, wie in Fig. 2 durch eine gestrichelt dargestellte, zusätzliche Schalteinrichtung 24a angedeutet ist. Diese aus Gründen der Redundanz häufig bevorzugte Variante ermöglicht einerseits eine Reduzierung der in den Spannungsquellen installierten Leistung und hat andererseits beim Versagen einer Spannungsquelle zur Folge, daß das Fahrzeug 7 noch mit dem von der anderen Spannungsquelle gelieferten Strom betrieben werden.

Die in Fig. 2 dargestellten Wicklungsabschnitte 5.1 bis 5.9 dienen außerdem meistens nur zum Antrieb einer, z. B. der rechten Seite des Fahrzeugs 7. Weitere Wicklungsabschnitte 26.1 bis 26.9 einer Wicklung 26, Schalteinrichtungen 27, 28 bzw. 29 und 30, Spannungsquellen 31 und 32 sowie Streckenkabel 33, 34 dienen in entsprechender Weise zum Antrieb der linken Fahrzeugseite.

Zur Steuerung der beschriebenen Magnetschwebebahn dient ein Geschwindigkeits- bzw. Stromregler 36, dem über eine Leitung 37 ein Sollwert für die jeweils zu erzielende bzw. einzuhaltende Geschwindigkeit des Fahrzeugs 7 und über eine Leitung 38 oder auch per Funk das vom Fahrzeug 7 übermittelte aktuelle Ortssignal zugeführt werden. Die Sollwerte für die Geschwindigkeit sind beispielsweise in einem Sollwert-Speicher 39 abgelegt, dem ebenfalls das Ortssignal zugeführt wird und der einen für den jeweils befahrenen Wicklungsabschnitt vorgegebenen Geschwindigkeits- oder Strom-Sollwert abgibt.

Der Stromregler 36 liefert an Ausgängen 40 Sollwerte, die z. B. aus Spannungs-Sollwerten bestehen und den Spannungsquellen 20, 21, 31 und 32 zugeführt werden, um in diesen die an die Streckenkabel anzulegenden Spannungen zu erzeugen bzw. um in die Wicklungsabschnitte die zur Erzielung der Nenngeschwindigkeit erforderlichen Ströme einzuspeisen. Mittels des am Fahrzeug 7 ermittelten Geschwindigkeit-Istsignals, das in einer Leitung 41 erscheint, überprüft der Geschwindigkeitsregler 36 die Einhaltung der vorgeschriebenen Nenngeschwindigkeit.

Schließlich sind in Fig. 2 in vereinfachter Darstellung mit der Leitung 38 verbundene Steuermittel 42 angedeutet, mittels derer die verschiedenen Schalteinrichtungen 15, 16, 23, 24, (24a), 29 und 30 des aus Fig. 2 ersichtlichen Streckenabschnitts in Abhängigkeit von der Ist-Position des Fahrzeugs 7 in v-Richtung so gesteuert werden, daß stets nur die gerade befahrenen Wicklungsabschnitte und die zugehörigen Spannungsquellen an die verschiedenen Streckenkabel angeschlossen sind. Die Steuermittel 42 können wie die Spannungsquellen 20, 21 od. dgl. in den Unterwerken untergebracht werden.

Verfahren und Vorrichtungen der beschriebenen Art und ihre Funktion sind aus den Druckschriften DE-OS 29 32 764 A2, DE 30 06 382 C2, DE 33 03 961 A1, US-PS 4 665 329, US-PS 4 728 382 und US-PS 5 053 654 bekannt, die daher zur Vermeidung von Wiederholungen durch Bezugnahme auf sie zum Gegenstand der vorliegenden Offenbarung gemacht werden.

Bei der Vorrichtung nach Fig. 2 bilden das Streckenkabel 19, die mit diesem verbundene Spannungsquelle 20 und die an das Streckenkabel 19 anschließbaren Wicklungsabschnitte 5.1 bis 5.9 eine nachfolgend als "Antriebsbereich" bezeichnete Einheit. Da das Fahrzeug 7 nach Fig. 2 an beiden Längsseiten angetrieben wird, gehören diesem Antriebsbereich auch das Streckenkabel 33, die Spannungsquelle 31 und die Wicklungsabschnitte 26.1 bis 26.9 an.

Aufgrund der beschriebenen Betriebsweise eines Magnetschwebefahrzeugs kann in einem Antriebsbereich jeweils nur ein Magnetschwebefahrzeug verkehren. Dadurch hängt der Fahrtakt von der Länge (z. B. 20 km) des von den Streckenkabeln 19 und 33 bedienten Teils des Fahrwegs und von der Geschwindigkeit der Fahrzeuge ab. Durch die vorliegende Erfindung wird dagegen die Möglichkeit geschaffen, die Fahrzeuge wenigstens mit der doppelten Fahrzeugdichte auf dem Fahrweg fahren zu lassen. Dies wird nachfolgend anhand von vier Ausführungsbeispielen näher erläutert.

Fig. 3a zeigt schematisch eine bekannte Betriebsweise mit Einfachspeisung und fester Zuordnung der Umrichter und Streckenkabel, wobei angenommen ist, daß sich Fahrzeuge 7a und 7b in Richtung des Pfeils v bewegen. Längs des Fahrwegs sind dazu auf einer rechten Fahrzeugseite (in Fig. 3a unten) und einer linken Fahrzeugseite (in Fig. 3a oben) im Ausführungsbeispiel jeweils vier hintereinander angeordnete Streckenkabel 51a bis 51d bzw. 52a bis 52d dargestellt. Jedes Streckenkabel (z. B. 51b, 51c, 52b, 52c) ist mittels je einer Schalteinrichtung (z. B. 53a, 53b, 54a, 54b) an eine ihm fest zugeordnete, z. B. aus einem Umrichter bestehende Spannungsquelle (z. B. 55a, 55b bzw. 56a, 56b) anschließbar. Im Gegensatz zu Fig. 2 sind die Spannungsquellen 55a, 55b, 56a, 56b einerseits nicht auf benachbarte Streckenkabel umschaltbar (z. B. 19 und 22 in Fig. 2) und andererseits nicht stets an in Richtung des Pfeils v vorlaufenden Enden, sondern z. B. abwechselnd am vorlaufenden oder am nachlaufenden Ende der Streckenkabel angeordnet, so daß z. B. die Spannungsquelle 55b das Streckenkabel 51c und die Spannungsquelle 55a das Streckenkabel 51b speist. Die übrigen Streckenkabel sind entsprechend mit Spannungsquellen und Wicklungsabschnitten verbindbar.

Die Streckenkabel 51b, 51c, 52b, 52c sind analog zu Fig. 2 mittels Schalteinrichtungen 57a, 57b, 58a, 58b an die ihnen zugeordneten Wicklungsabschnitte 5.1 bis 5.9 bzw. 26.1 bis 26.9 anschließbar, wobei in Fig. 3a der Einfachheit halber für die Streckenkabel 51b, 52b und 51c, 52c stellvertretend nur je ein zugeordneter Wicklungsabschnitt 5a, 26a bzw. 5b, 26b dargestellt ist, der in weiterer Analogie zu Fig. 2 über Schalteinrichtungen (z. B. 59a, 59b) an einen Sternpunkt 60a, 60b anschließbar ist. Die übrigen Streckenkabel und Wicklungsabschnitte sind in entsprechender Weise an nicht dargestellte Spannungsquellen anschließbar.

Im normalen Betrieb bilden die Streckenkabel 51b, 52b mit den zugehörigen Spannungsquellen 55a, 56a und Wicklungsabschnitten 5a, 26a einen Antriebsbereich A1, während die Streckenkabel 51c, 52c mit den Spannungsquellen 55b, 56b und den Wicklungsabschnitten 5b, 26b einen Antriebsbereich A2 bilden. In jedem dieser Antriebsbereiche A1, A2 befindet sich jeweils höchstens ein einziges Fahrzeug 7a bzw. 7b. Aus diesem Grund sind die Schalteinrichtungen 53a, 53b, 54a, 54b sowie 57a, 57b, 58a, 58b sowie 59a, 59b bei der Durchfahrt der Fahrzeuge 7a, 7b jeweils im geschlossenen Zustand. Dabei ist der Einfachheit halber angenommen, daß alle Fahrzeuge 7a, 7b mit derselben Geschwindigkeit betrieben werden, so daß beim Überwechseln z. B. vom Antriebsbereich A1 auf den Antriebsbereich A2 keine Änderung der Programmierung für die Steuermittel 42 (Fig. 2) erforderlich ist. Die übrigen längs des Fahrwegs vorhandenen Streckenkabel, Spannungsquellen bzw. Umrichter und Wicklungsabschnitte bilden entsprechend betriebene Antriebsbereiche.

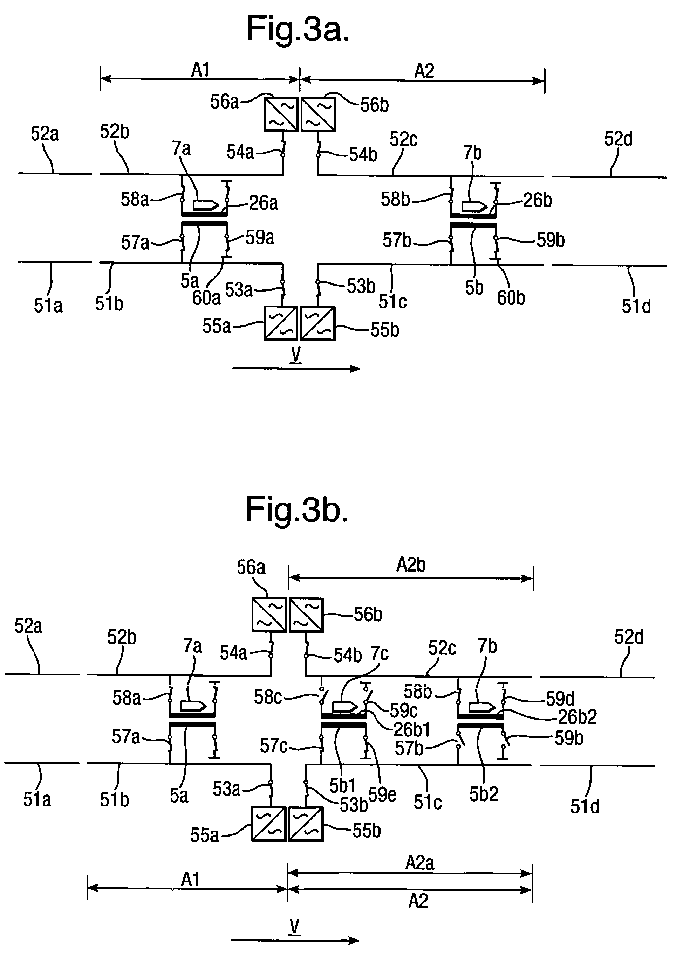

Fig. 3b, in der gleiche Teile mit denselben Bezugszeichen wie in Fig. 3a bezeichnet sind, zeigt eine erfindungsgemäße Verdoppelung der Fahrzeugdichte im Antriebsbereich A2. Dies ist dadurch möglich, daß der Antriebsbereich A2 in zwei Antriebsbereichabschnitte A2a und A2b unterteilt wird. Dabei enthält der Antriebsbereichabschnitt A2a die Spannungsquelle 55b, das rechte Streckenkabel 51c und die damit verbindbaren, rechten Wicklungsabschnitte (z. B. 5b1 und 5b2) mit zugehörigen Schalteinrichtungen 57c, 57b bzw. 59e und 59b, während der Antriebsbereichabschnitt A2b entsprechend die Spannungsquelle 56b, das linke Streckenkabel 52c und die mit diesen verbindbaren, linken Wicklungsabschnitte (z. B. 26b1 und 26b2) mit zugehörigen Schalteinrichtungen 58c, 58b bzw. 59c, 59d enthält. In Richtung des Pfeils v liegen die beiden Antriebsbereichabschnitte A2a und A2b nebeneinander. Mittels der Steuermittel 42 (Fig. 2) wird dabei dafür gesorgt, daß beim Passieren des ersten Fahrzeugs 7b z. B. nur die linken Schalteinrichtungen 58b, 59d geschlossen sind, während entsprechende Schalteinrichtungen 57b, 59b für einen rechten Wicklungsabschnitt 5b2 im offenen Zustand verbleiben. Wird derselbe Antriebsbereich A2 dagegen von einem zweiten Fahrzeug 7c durchfahren, dann befinden sich zugehörige Schalteinrichtungen 58c, 59c im geöffneten und zugehörige Schalteinrichtungen 57c, 59e im geschlossenen Zustand. Eine Folge davon ist, daß das Fahrzeug 7b nur von der Spannungsquelle 56b und das Fahrzeug 7c nur von der Spannungsquelle 55b aus und daher jeweils nur mit der halben Energie versorgt wird. Die dadurch etwas verringerte Fahrgeschwindigkeit kann angesichts des wesentlichen Vorteils in Kauf genommen werden, daß im Vergleich zu bisher (Fig. 3a) nur eine andere Betätigung der Schalteinrichtungen (z. B. 57c, 58c, 57b, 58b) und damit eine Änderung der Software erforderlich ist, um die doppelte Zahl von Fahrzeugen zu betreiben. Die Hardware kann dagegen unverändert bleiben.

Die für die Antriebsbereichabschnitte A2a, A2b und die Fahrzeuge 7b, 7c beispielhaft angegebenen Änderungen können je nach Bedarf in einer Mehrzahl von ausgewählten Antriebsbereichen A vorgesehen werden, wobei diese Mehrzahl auch alle längs des Fahrwegs vorhandenen Antriebsbereiche umfassen kann, so daß im Idealfall längs des gesamten Fahrwegs eine doppelte Fahrzeugdichte vorgesehen werden kann. Ist es erwünscht, die Fahrzeuge nach dem normalen Fahrplan zu betreiben, werden wie bisher die in Fig. 3a und 3b für das Fahrzeug 7a gezeigten Betriebsbedingungen für die verschiedenen Schalteinrichtungen vorgesehen.

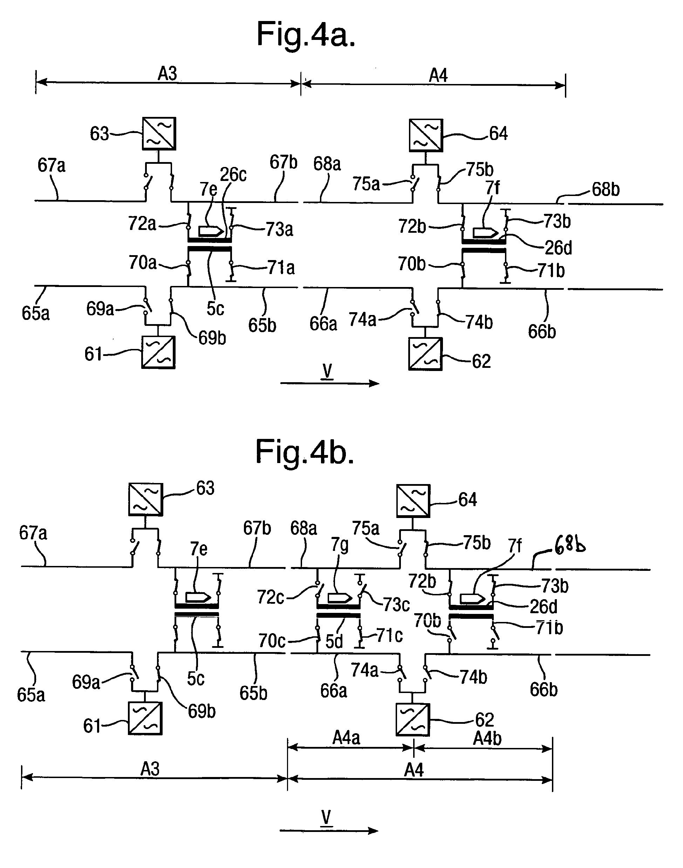

Fig. 4a und 4b zeigen ein Ausführungsbeispiel, das analog zu Fig. 3a, 3b mit Einfachspeisung betrieben wird, wobei jedoch die Spannungsquellen analog zu Fig. 2 wahlweise auf eines von zwei Streckenkabeln umschaltbar sind. Im Gegensatz zu dort sind allerdings Spannungsquellen 61, 62 bzw. 63, 64 jeweils zwischen zwei Streckenkabeln 65a, 65b bzw. 66a, 66b bzw. 67a, 67b bzw. 68a, 68b usw. angeordnet, wobei die Streckenkabel 65b, 66a bzw. 67b, 68a usw. an ihren aneinander grenzenden Enden getrennt sind. Die Spannungsquelle 61 kann daher mittels einer Schalteinrichtung 69a, 69b zunächst mit dem Streckenkabel 65a verbunden und vom Streckenkabel 65b getrennt werden. Wenn ein Fahrzeug 7e die mit diesen verbundenen Wicklungsabschnitte passiert hat, wird die Spannungsquelle 61 dagegen an das Streckenkabel 65b angeschlossen und gleichzeitig vom Streckenkabel 65a getrennt. In entsprechender Weise können die Spannungsquellen 63, 64 an die Streckenkabel 67a bis 68b angeschlossen werden. Dabei ist in Fig. 4a gezeigt, daß das Fahrzeug 7e gerade durch die Wicklungsabschnitte 5c, 26c angetrieben wird, die durch in Schließstellung befindliche Schalteinrichtungen 70a, 71a bzw. 72a, 73a aktiviert sind.

Da die Spannungsquellen 61 bis 64 jeweils zwei verschiedene Streckenkabel mit Strom versorgen können, wird im Fall der Fig. 4a ein Antriebsbereich A3 durch je eine Spannungsquelle (z. B. 61), zwei dieser zugeordnete Streckenkabel (z. B. 65a, 65b) und die diesen zugeordneten Wicklungsabschnitte (z. B. 5c) gebildet. Beim Vorhandensein von zwei Linearantrieben pro Fahrzeug enthält der Antriebsbereich A3 auch die Spannungsquelle 63, die zugehörigen Streckenkabel 67a, 67b und die Wicklungsabschnitte 26c. Für einen Antriebsbereich A4 gilt sinngemäß dasselbe. Wie im Beispiel der Fig. 3a ist daher für einen Normalbetrieb bisher vorausgesetzt, daß das Fahrzeug 7e erst in den Antriebsbereich A4 überwechseln darf, wenn ein vorausfahrendes Fahrzeug 7f den Antriebsbereich A4 verlassen hat. Das folgt daraus, daß z. B. die Streckenkabel 66a, 68a bei der in Fig. 4a gezeigten Situation nicht für den Antrieb des Fahrzeugs 7e zur Verfügung stehen, so lange die Spannungsquellen 62, 64 mit den Streckenkabeln 66b, 68b verbunden sind und das Fahrzeug 7f antreiben.

Erfindungsgemäß wird eine Halbierung des Fahrtakts dadurch erreicht, daß die Fahrzeuge bei Bedarf analog zu Fig. 3b nur mit dem einen oder anderen der beiden Linearantriebe betrieben werden. Dies ist dadurch möglich, daß z. B. der Antriebsbereich A4 in zwei voneinander unabhängige Antriebsabschnitte A4a und A4b unterteilt wird. Dabei enthält der Antriebsbereichabschnitt A4a die Spannungsquelle 62 und das vor der Spannungsquelle 62 befindliche Streckenkabel 66a sowie zugehörige Wicklungsabschnitte 5d, während der Antriebsbereichabschnitt A4b die Spannungsquelle 64, das in Richtung des Pfeils v hinter dieser angeordnete Streckenkabel 68b und zugehörige Wicklungsabschnitte 26d umfaßt. Im Gegensatz zu Fig. 3b liegen hier somit die Antriebsbereichabschnitte A4a, A4b nicht nebeneinander, sondern in Fahrtrichtung hintereinander.

Die Funktion der Vorrichtung nach 4b ist im wesentlichen dieselbe wie die der Fig. 3b. Ist eine doppelte Fahrzeugdichte erwünscht, wird mittels der Steuermittel 42 (Fig. 2) dafür gesorgt, daß z. B. im Antriebsbereichabschnitt A4a die Spannungsquelle 62 mittels einer Schalteinrichtung 74a an das Streckenkabel 66a der rechten Antriebsseite angeschlossen ist, während das Streckenkabel 68a der linken Antriebsseite mittels einer im geöffneten Zustand befindlichen Schalteinrichtung 75a von der Spannungsquelle 64 getrennt wird. Im nachfolgenden Antriebsbereichabschnitt A4b ist es dagegen umgekehrt. Hier ist das rechte Streckenkabel 66b mittels einer Schalteinrichtung 74b von der zugehörigen Spannungsquelle 62 getrennt, während gleichzeitig das linke Streckenkabel 68b mittels einer im Schließzustand befindlichen Schalteinrichtung 75b an die Spannungsquelle 64 angeschlossen ist. Daher kann zusätzlich zu dem auch in Fig. 4a gezeigten Fahrzeug 7f, das bei geschlossenen Schalteinrichtungen 72b, 73b den Antriebsbereichabschnitt A4b durchfährt, ein zweites Fahrzeug 7g im Antriebsbereichabschnitt A4a betrieben werden, indem die Wicklungsabschnitte 5d mit Schalteinrichtungen 70c, 71c aktiviert werden. Die Schalteinrichtungen 70b, 71b und entsprechende Schalteinrichtungen 72c, 73c sind in diesem Fall im geöffneten Zustand. Bei Bedarf ist es wiederum möglich, alle vorhandene Antriebsbereiche in der beschriebenen Weise zu unterteilen. Im Hinblick auf die Verteilung der installierten Leistung auf die je zwei Antriebsbereichabschnitte A4a und A4b gilt dasselbe wie für die Antriebsbereichabschnitte A2a und A2b nach Fig. 3b.

Die Vorrichtung nach Fig. 4b kann wie im Fall der Fig. 3b allein durch Änderung des Programms für die Steuermittel 42, d. h. durch eine Änderung der Software realisiert werden. Zusätzliche Hardwarekomponenten sind nicht erforderlich.

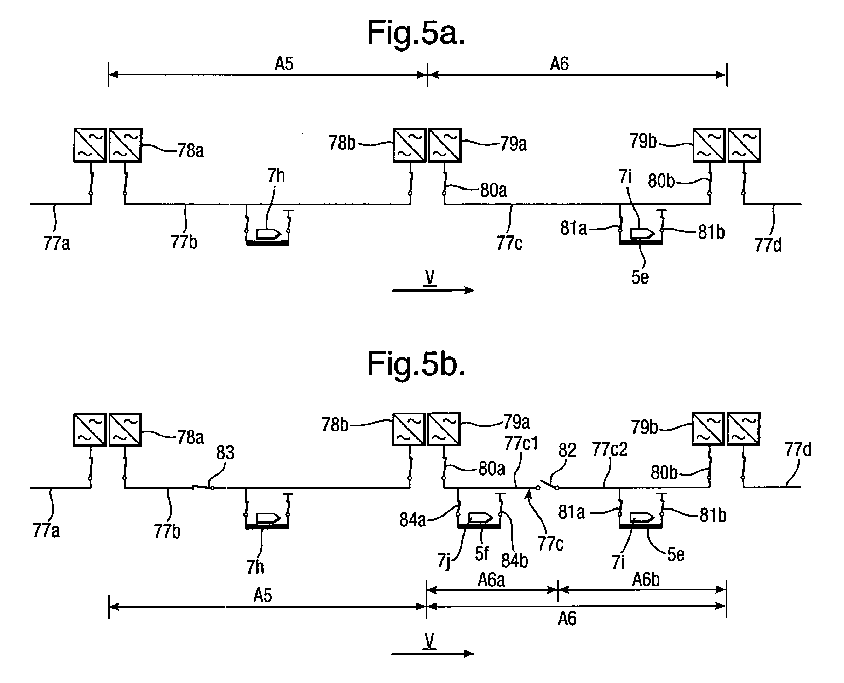

Fig. 5a und 5b zeigen ein Ausführungsbeispiel mit Doppelspeisung und fester Zuordnung der Spannungsquellen und Streckenkabel. Zur Vereinfachung der Darstellung sind hier nur die auf einer Fahrzeugseite bzw. für einen Linearantrieb vorgesehenen Einrichtungen dargestellt, da beim Vorhandensein von zwei oder mehr Linearantrieben pro Fahrzeug diese im wesentlichen identisch ausgebildet sind.

In Fig. 5a sind entsprechend der bisherigen Betriebsweise hintereinander z. B. vier Streckenkabel 77a bis 77d vorhanden. Jedes Streckenkabel 77b, 77c ist an seinen Enden mit zwei fest zugeordneten Spannungsquellen 78a, 78b bzw. 79a, 79b verbunden. Jedes Streckenkabel (z. B. 77c) bildet außerdem mit zwei angeschlossenen Spannungsquellen (z. B. 79a, 79b) und zugehörigen Wicklungsabschnitten (5e) jeweils einen Antriebsbereich A5 bzw. A6, in dem jeweils nur ein einziges Fahrzeug 7h bzw. 7i fahren kann, sofern die Streckenkabel einerseits über Schalteinrichtungen 80a, 80b usw. mit den zugeordneten Spannungsquellen 79a, 79b usw. verbunden und andererseits über Schalteinrichtungen 81a, 81b die zugehörigen Wicklungsabschnitte 5e usw. aktiviert sind.

Dagegen zeigt Fig. 5b, wie auch im Fall der Fig. 5a durch Unterteilung der Antriebsbereiche A5 bzw. A6 eine Vergrößerung der Fahrzeugdichte erzielt werden kann. Hierzu ist erfindungsgemäß vorgesehen, die Streckenkabel (z. B. 77c) mit einem Trennschalter 82 zu versehen, der zweckmäßig in einem mittleren Teil des Streckenkabels 77c liegt und im Schließzustand ein durchgehendes Streckenkabel bildet, wie in Fig. 5b für das Streckenkabel 77b und einen in diesem angeordneten Trennschalter 83 gezeigt ist. Im geöffneten Zustand des Trennschalters 82 entstehen dagegen zwei voneinander unabhängige Streckenkabelabschnitte 77c1 und 77c2, wobei z. B. der Streckenkabelabschnitt 77c1 durch die Schalteinrichtung 80a allein mit der Spannungsquelle 79a und der Streckenkabelabschnitt 77c2 durch die Schalteinrichtung 80b mit der Spannungsquelle 79b verbunden werden kann.

Ist bei der Vorrichtung nach Fig. 5a eine Verdoppelung der Fahrzeugdichte gewünscht, wird mittels des Steuermittels 42 (Fig. 2) der Trennschalter 82 und/oder 83 in den geöffneten Zustand gesteuert. Es ist dann möglich, außer dem Fahrzeug 7i, das sich analog zu Fig. 5a in einem die Spannungsquelle 79b und den Streckenkabelabschnitt 73c2 enthaltenden Antriebsbereichabschnitt A6b befindet, ein weiteres Fahrzeug 7j in einem die Spannungsquelle 79a und den Streckenkabelabschnitt 77c1 enthaltenden Antriebsbereichabschnitt A6a zu bewegen, indem der Streckenkabelabschnitt 77c1 mittels der Schalteinrichtung 80a an die Spannungsquelle 79a angeschlossen und ein entsprechender Wicklungsabschnitt 5f mittels Schalteinrichtungen 84a, 84b aktiviert wird Die mit dieser Bereichsaufteilung verbundene Aufteilung der in den Spannungsquellen 79a, 79b installierten Leistung ist analog zu Fig. 3b und 4b tolerierbar. Im Unterschied zu Fig. 3b und 4b erfolgt hier die Erhöhung der Fahrzeugdichte allerdings durch einen Übergang von Doppelspeisung (Fig. 5a) auf Einfachspeisung (Fig. 5b). Eine Trennung der Antriebsbereiche in einen linken und rechten Bereich analog zu Fig. 3b ist alternativ oder zusätzlich möglich (nicht dargestellt).

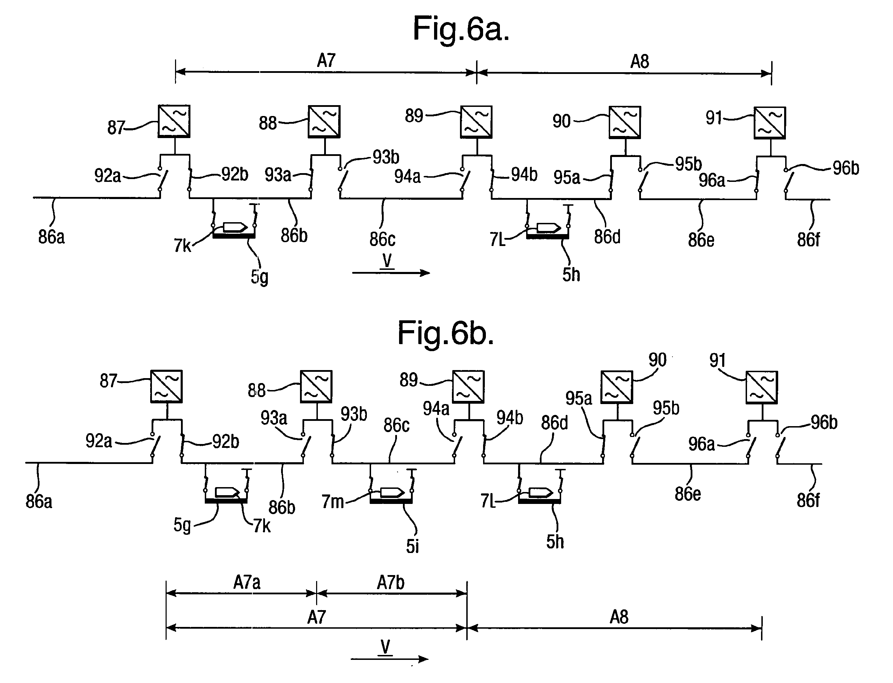

Schließlich zeigen Fig. 6a und 6b ein weiteres Ausführungsbeispiel, das analog zu Fig. 5a und 5b eine Doppelspeisung vorsieht, allerdings mit umschaltbaren Umrichtern analog zu Fig. 4a und 4b versehen ist. Dabei sind wiederum nur die Einrichtungen eines einzelnen Linearantriebs gezeigt, da evtl. vorhandene weitere Linearantriebe identisch ausgebildet werden können.

Nach Fig. 6a sind beispielsweise sechs in Richtung des Fahrwegs hintereinander angeordnete Streckenkabel 86a bis 86f und fünf Spannungsquellen 87 bis 91 dargestellt, die mit Schalteinrichtungen 92a, 92b usw. bis 96a, 96b an die Streckenkabel 86a bis 86f angeschlossen werden können. Befinden sich z. B. die Schalteinrichtungen 92b, 93a sowie 94b, 95a entsprechend Fig. 6a im geschlossenen Zustand, während alle anderen Schalteinrichtungen im geöffneten Zustand sind, dann werden die Streckenkabel 86b und 86d mit dem vorgegebenen Nennstrom versorgt, und Fahrzeuge 7k und 71 können entsprechend den vorgewählten Normalbedingungen mit ihrer Nenngeschwindigkeit betrieben werden. Beachtlich dabei ist, daß die Streckenkabel 86a, 86c und 86e stromlos sein müssen, weil die ihnen zugeordneten Spannungsquellen 87 bis 91 für sie nicht zur Verfügung stehen.

Entsprechend den bereits beschriebenen Ausführungsbeispielen bilden in dem dargestellten Zustand einerseits die Spannungsquellen 87, 88 und 89 mit den ihnen zugeordneten Streckenkabeln 86b und 86c und zugehörigen Wicklungsabschnitten 5g einen ersten Antriebsbereich A7, während andererseits die Spannungsquellen 89, 90 und 91 mit den zugeordneten Streckenkabeln 86d und 86e und an diese anschließbaren Wicklungsabschnitten 5h einen zweiten Antriebsbereich A8 bilden. Gelangen die Fahrzeuge 7k und 7l später in den Bereich der (nicht dargestellten) Wicklungsabschnitte, die mit den Streckenkabeln 86c bzw. 86e verbunden sind, werden die Schalteinrichtungen 92b, 93a bzw. 94b, 95a geöffnet und statt dessen die Schalteinrichtungen 93b, 94a und 95b, 96a geschlossen, so daß jetzt die Streckenkabel 86c und 86e mit Strom versorgt werden. Wie bei den vorher beschriebenen Ausführungsbeispielen kann aber das Fahrzeug 7k erst in den Antriebsbereich A8 einfahren, wenn das Fahrzeug 71 diesen Antriebsbereich A8 verlassen hat und dadurch die Spannungsquellen 90 für das Fahrzeug 7k verfügbar ist.

Fig. 6b zeigt demgegenüber die erfindungsgemäße Steuerung der Schalteinrichtungen.

Hiernach sind z. B. die Schalteinrichtungen 92b, 93b und 94b im geschlossenen Zustand, die Schalteinrichtungen 93a und 94a dagegen im geöffneten Zustand. Das hat zur Folge, daß jetzt das Streckenkabel 86b nur von der Spannungsquelle 87 und das Streckenkabel 86c nur von der Spannungsquelle 88 mit Strom versorgt wird. Dadurch entsteht einerseits ein die Spannungsquelle 87, das Streckenkabel 86b und die zugehörigen Wicklungsabschnitte 5g enthaltender, erster Antriebsbereichabschnitt A7a und andererseits ein davon unabhängiger, die Spannungsquelle 88, das Streckenkabel 86c und zugehörige Wicklungsabschnitte 5i enthaltender, zweiter Antriebsbereichabschnitt A7b. Als Folge davon kann sowohl im Antriebsbereichabschnitt A7a das Fahrzeug 7k als auch im Antriebsbereich A7b ein weiteres Fahrzeug 7m fahren, d. h. die Fahrzeugdichte im Antriebsbereich A7 verdoppelt werden. Entsprechend können die übrigen Antriebsbereiche (z. B. A8) in je zwei Antriebsbereichabschnitte unterteilt werden.

Auch bei diesem Ausführungsbeispiel erfolgt die Erhöhung der Fahrzeugdichte durch Übergang von einer Doppelspeisung (Fig. 6a) auf eine Einfachspeisung (Fig. 6b). Der dadurch bewirkte Verlust an Antriebsleistung kann wie bei den übrigen beschriebenen Vorrichtungen in Kauf genommen werden. Ein besonderer Vorteil der Vorrichtung nach Fig. 6b ergibt sich außerdem dadurch, daß im Gegensatz zu Fig. 5b keine zusätzlichen Trennschalter 82, 83 erforderlich sind. Zur Realisierung der Vorrichtung nach Fig. 6b reicht es im übrigen aus, die Schalteinrichtungen mittels der Steuermittel 42 (Fig. 2) anders als bisher zu steuern, d. h. es ist kein zusätzlicher Aufwand an Hardware erforderlich.

Die Erfindung ist nicht auf die beschriebenen Ausführungsbeispiele beschränkt, die auf vielfache Weise abgewandelt werden können. Insbesondere können zur Vermeidung von Schubkraftverlusten beim Überfahren von Wechselstellen zwischen den einzelnen Wicklungsabschnitten alle bisher für diese Zwecke bekannten Maßnahmen angewendet werden, die z. B. als Bocksprung-, Wechselschritt-, Dreischritt- oder Vierschrittverfahren bekannt sind (z. B. elektrotechnische Zeitschrift etz, Bd. 108, 1987, Heft 9, Seiten 378 bis 381, DE 199 22 441 A1, DE 102 27 253 A1). Ähnliche Maßnahmen könnten beim Umschalten der Streckenkabel vorgesehen werden. Weiter ist es natürlich möglich, die Erfindung auch auf Vorrichtungen anzuwenden, bei denen die Spannungsquellen entsprechend Fig. 2 so an die Streckenkabel angeschlossen sind, daß wie in Fig. 3 und 4 abwechselnd nur die Streckenkabel 19, 22 oder nur die Streckenkabel 33, 34 zum Antrieb der Fahrzeuge 7 benutzt werden. Auch die beschriebenen Schalteinrichtungen und Steuermittel sowie die angegebenen Festlegungen für die verschiedenen Antriebsbereiche bzw. Antriebsbereichabschnitte können anders als beschrieben sein. Schließlich versteht sich, daß die verschiedenen Merkmale auch in anderen als den beschriebenen und dargestellten Kombinationen angewendet werden können.

## Patentansprüche

1. Verfahren zum Betreiben eines Magnetschwebefahrzeugs mittels einer wenigstens einen Langstator-Linearantrieb aufweisenden Vorrichtung, die wenigstens eine längs eines Fahrwegs verlegte, in Wicklungsabschnitte (5.1 bis 5.9, 26.1 bis 26.9) unterteilte Wechselstromwicklung (5, 26), eine an dem Fahrzeug (7) montierte Erregeranordnung (6), längs des Fahrwegs angeordnete Streckenkabel (51, 52; 65 bis 68; 77; 86) und diesen zugeordnete Spannungsquellen (55, 56; 61 bis 64; 78, 79; 87 bis 91) aufweist, wobei die Wicklungsabschnitte (5.1 bis 5.9, 26.1 bis 26.9) entsprechend der Fortbewegung des Fahrzeugs (7) an zugeordnete Streckenkabel (51, 52; 64 bis 68; 77; 86) und Spannungsquellen (55, 56; 61 bis 64; 78, 79; 87 bis 91) angeschlossen werden und wobei die Streckenkabel (51, 52; 65 bis 68; 77; 86), die Wicklungsabschnitte (5.1 bis 5.9, 26.1 bis 26.9) und die Spannungsquellen (55, 56; 61 bis 64; 78, 79; 87 bis 91) längs des Fahrwegs aufeinander folgenden Antriebsbereichen (A) derart zugeordnet werden, daß unter normalen Betriebsbedingungen in jedem Antriebsbereich (A) ein Fahrzeug (7) mit einer für den Antriebsbereich (A) vorgegebenen und von den zugeordneten Spannungsquellen (55, 56; 61 bis 64; 78, 79; 87 bis 91) gelieferten Leistung betrieben wird, **dadurch gekennzeichnet, daß** zur Vergrößerung der Fahrzeugdichte längs des Fahrwegs ausgewählte Antriebsbereiche (A2, A4, A6, A7) in wenigstens zwei voneinander unabhängige Antriebsbereichabschnitte (A2a, A2b; A4a, A4b; A6a, A6b; A7a, A7b) unterteilt werden und daß in jedem Antriebsbereichabschnitt (A2a, A2b; A4a, A4b; A4a, A4b; A6a, A6b; A7a, A7b) ein Fahrzeug (7) mit einem Teil der pro Antriebsbereich (A) vorgegebenen Leistung betrieben wird.

2. Verfahren nach Anspruch 1, **dadurch gekennzeichnet, daß** bei Antriebsbereichen (A6, A7) mit Doppelspeisung für die Streckenkabel (77, 86) eine Aufteilung in zwei Antriebsbereichabschnitte (A6a, A6b; A7a, A7b) **dadurch** vorgenommen wird, daß in diesen Antriebsbereichen (A6, A7) von Doppelspeisung auf Einfachspeisung übergegangen wird.

3. Verfahren nach Anspruch 2, **dadurch gekennzeichnet, daß** zum Übergang von Doppelspeisung auf Einfachspeisung die betreffenden Streckenkabel (77b, 77c) mit Trennschaltern (82, 83) versehen und diese in einen geöffneten Zustand versetzt werden.

4. Verfahren nach Anspruch 2, **dadurch gekennzeichnet, daß** zum Übergang von Doppelspeisung auf Einfachspeisung die Streckenkabel (86) an nur je eine von zwei zugeordneten Spannungsquellen (87 bis 91) angeschlossen werden.

5. Verfahren nach Anspruch 1, **dadurch gekennzeichnet, daß** bei Fahrzeugen (7), die wenigstens zwei voneinander unabhängige Langstator-Linearantriebe aufweisen, eine Aufteilung in wenigstens zwei Antriebsbereichabschnitte (A2a, A2b; A4a, A4b) **dadurch** erfolgt, daß jedem Antriebsbereichabschnitt (A2a, A2b; A4a, A4b) nur einer der Linearantriebe zugeordnet wird.

6. Verfahren nach Anspruch 5, **dadurch gekennzeichnet, daß** bei Antriebsbereichen (A4) mit Einfachspeisung für die Streckenkabel (65 bis 68) die Zuordnung im wesentlichen mit Hilfe von Schalteinrichtungen (69, 74, 75) vorgenommen wird, die die Streckenkabel (65 bis 68) mit ausgewählten Spannungsquellen (61 bis 64) verbinden.

7. Verfahren nach Anspruch 5, **dadurch gekennzeichnet, daß** bei Antriebsbereichen (A2) mit Einfachspeisung für die Streckenkabel (51, 52) die Zuordnung im wesentlichen mit Hilfe von Schalteinrichtungen (57, 58) vorgenommen wird, die die Wicklungsabschnitte (5b1, 26b1; 5b2, 26b2) mit ausgewählten Streckenkabeln (51, 52) verbinden.

8. Vorrichtung mit wenigstens einem Langstator-Linearantrieb für ein Magnetschwebefahrzeug (7), enthaltend: wenigstens eine längs eines Fahrwegs verlegte, in Wicklungsabschnitte (5.1 bis 5.9, 26.1 bis 26.9) unterteilte Wechselstromwicklung (5, 26), eine an dem Fahrzeug (7) montierte Erregeranordnung (6), längs des Fahrwegs angeordnete Streckenkabel (51, 52; 65 bis 68; 77; 86), längs des Fahrwegs mit Abstand angeordnete Spannungsquellen (55, 56; 61 bis 65; 78, 79; 87 bis 91) und Steuermittel (42) zum nacheinander erfolgenden Anschluß der Wicklungsabschnitte (5.1 bis 5.9, 26.1 bis 26.9) an zugeordnete Streckenkabel (51, 52; 65 bis 68; 77; 86) und Spannungsquellen (55, 56; 61 bis 64; 78, 79; 87 bis 91) entsprechend der Fortbewegung des Fahrzeugs (7), wobei in Richtung des Fahrwegs aufeinander folgende, aus zugeordneten Wicklungsabschnitten (5.1 bis 5.9, 26.1 bis 26.9), Streckenkabeln (51, 52; 65 bis 68; 77; 86) und Spannungsquellen (55, 56; 61 bis 64; 78, 79; 87 bis 91) gebildete Antriebsbereiche (A) vorgesehen sind, in denen unter normalen Betriebsbedingungen nur je ein Fahrzeug (7) mit einer für den betreffenden Antriebsabschnitt (A) vorgegebenen und von den zugeordneten Spannungsquellen (55, 56; 61 bis 64; 78, 79; 87 bis 91) gelieferten Leistung betreibbar ist, **dadurch gekennzeichnet, daß** zur Vergrößerung der Fahrzeugdichte längs des Fahrwegs ausgewählte Antriebsbereiche (A2, A4, A6, A7) in wenigstens zwei voneinander unabhängige Antriebsbereichabschnitte (A2a, A2b; A4a, A4b; A6a, A6b; A7a, A7b) derart unterteilbar sind, daß in jedem Antriebsbereichabschnitt (A2a, A2b; A4a, A4b; A6a, A6b; A7a, A7b) ein Fahrzeug (7) mit einem Teil der pro Antriebsbereich (A) vorgegebenen Leistung betreibbar ist.

9. Vorrichtung nach Anspruch 8, **dadurch gekennzeichnet, daß** die Antriebsbereiche (A3, A4; A7, A8) Streckenkabel (65, 67; 86) enthalten, die über Schalteinrichtungen (69, 74, 75; 92 bis 96) an je zwei Spannungsquellen (61 bis 64; 87 bis 91) anschließbar sind, und daß die Steuermittel (42) so eingerichtet sind, daß die Streckenkabei (65, 67; 86) mittels der Schalteinrichtungen (69, 74, 75; 92 bis 96) wahlweise an nur eine der beiden Spannungsquellen (61 bis 64; 87 bis 91) angeschlosssen werden.

10. Vorrichtung nach Anspruch 8, **dadurch gekennzeichnet, daß** die Antriebsbereiche (A5, A6) Streckenkabel (77) enthalten, die je zwei Spannungsquellen (78, 79) fest zugeordnet sind und eingebaute Trennschalter (82, 83) aufweisen, und daß die Steuermittel (42) so eingerichtet sind, daß die Streckenkabel (77) durch Betätigung der Trennschalter (82, 84) in zwei voneinander unabhängige, mit nur je einer der zugeordneten Spannungsquellen (78, 79) verbundene Streckenkabelabschnitte (77c1, 77c2) unterteilbar sind.

11. Vorrichtung nach einem der Ansprüche 8 bis 10, **dadurch gekennzeichnet, daß** sie wenigstens zwei Langstator-Linearantriebe und pro Antriebsbereich (A) je zwei Antriebsbereichabschnitte (A2a, A2b; A4a, A4b) aufweist, und daß Schalteinrichtungen (57 bis 59; 70 bis 73) derart vorgesehen sind, daß jedes Fahrzeug (7b, 7c, 7f, 7g) nur mit einem der beiden Antriebsbereichabschnitte (A2a, A2b; A4a, A4b) betreibbar ist.

12. Vorrichtung nach Anspruch 11, **dadurch gekennzeichnet, daß** die Antriebsbereiche (A2) Streckenkabel (51, 52) enthalten, die über die Schalteinrichtungen (57 bis 59) je einer zugeordneten Spannungsquelle (55, 56) fest zugeordnet sind, und daß die Steuermittel (42) so eingerichtet sind, daß die Antriebsbereichabschnitte (A2a, A2b) nebeneinander liegen und die Fahrzeuge (7b, 7c) abwechselnd mittels der Streckenkabel (51, 52) des einen oder anderen Linearantriebs betreibbar sind.

13. Vorrichtung nach Anspruch 12, **dadurch gekennzeichnet, daß** die Schalteinrichtungen (57 bis 59) zum wahlweisen Anschluß der Wicklungsabschnitte (5b1, 26b1; 5b2, 26b2) an das eine oder andere Streckenkabel (51, 52) eingerichtet sind.

14. Vorrichtung nach Anspruch 11, **dadurch gekennzeichnet, daß** die Antriebsbereiche (A3, A4) Streckenkabel (66, 68) aufweisen, die mittels Schalteinrichtungen (69, 74, 75) wahlweise an zugeordnete Spannungsquellen (61 bis 64) anschließbar sind, und daß die Steuermittel (42) so eingerichtet sind, daß die Antriebsbereichabschnitte (A4a, A4b) hintereinander liegen und die Fahrzeuge (7f, 7g) abwechselnd mittels des Streckenkabels (66, 68) des einen oder anderen Linearantriebs betreibbar sind.

15. Vorrichtung nach Anspruch 14, **dadurch gekennzeichnet, daß** die Schalteinrichtungen (69, 74, 75) dazu eingerichtet sind, in jedem Antriebsbereichabschnitt (A4a, A4b) nur das Streckenkabel (66, 68) eines der Linearantriebe an eine zugeordnete Spannungsquelle (62, 64) anzuschließen.
